# EUROPEAN PATENT SPECIFICATION

(11) **EP 4 485 068 B1**
(45) Date of publication and mention of the grant of the patent: **29.07.2026**
(21) Application number: 23181339.5
(22) Date of filing: 26.06.2023
(51) Int. Cl.: G03B 21/20

(54) **HIGH ILLUMINANCE LASER PROJECTOR FOR PROJECTION ON VEHICLE SURFACES**
LASERPROJEKTOR MIT HOHER BELEUCHTUNGSSTÄRKE ZUR PROJEKTION AUF FAHRZEUGOBERFLÄCHEN
PROJECTEUR LASER À ÉCLAIREMENT ÉLEVÉ POUR PROJECTION SUR DES SURFACES DE VÉHICULE

(43) Date of publication of application: 01.01.2025
(73) Proprietor: Wuhan Lotus Cars Co., Ltd., Wuhan, Hubei (CN)
(72) Inventor: Gross, Martin, 65428 Rüsselsheim (DE); Langkabel, Frank, 55283 Nierstein (DE); Haberkorn, Rouven, 65934 Frankfurt am Main (DE); Ndjeundoun, Paul, 65428 Rüsselsheim (DE); Müller, Jürgen, 14165 Berlin (DE)
(74) Representative: Studio Torta S.p.A.

(56) References cited:
- CN-B- 113 176 701
- US-A1- 2016 328 854
- US-A1- 2017 166 111
- US-A1- 2020 192 206
- US-B1- 7 175 321
- SCHREIBER HORST ET AL: "Diffractive optical elements for calibration of LIDAR systems: materials and fabrication", OPTICAL ENGINEERING, SOC. OF PHOTO-OPTICAL INSTRUMENTATION ENGINEERS, BELLINGHAM, vol. 62, no. 3, 1 March 2023 (2023-03-01), pages 31206, XP060172295, ISSN: 0091-3286, [retrieved on 20221214], DOI: 10.1117/1.OE.62.3.031206

## Description

The present invention relates to short distance projection on painted vehicle surfaces by means of a laser projector. The projector achieves a large field of view and a non-distorted projection with high illuminance on confined vehicle surfaces which are in particular 3D-shaped and painted in different colors, such as air ducts. It uses multiple diffractive optic elements (DOE) and one or more laser diodes within a single projector housing.

### Background

Existing solutions to show light functions on a vehicle surface are limited in design and execution. Known solutions usually focus on a backlight illumination shining through the surface. However, by this principle the solutions inevitably suffer from some technical restrictions.

First of all, the system efficiency is very low. Hence, high power is required for through the surface illumination which in turn results in voluminous light sources and high energy consumption. Further, the illumination is limited to one single predefined surface. If multiple lit surfaces are desired, multiple light sources and lamp compartments below the surface are required. Moreover, the illumination is also limited on surface shape complexity. A three-dimensional shape is only possible with high technical efforts unless a non-uniform visual impression is acceptable which as a rule is not since these illumination effects are an important visual design element. For the same reason, this illumination principle is disadvantageous due to the fact that under certain ambient light conditions the backlight system is visible in daytime through the surface. The illuminated surface is also typically limited to one color and surface finish, i.e., while the body color of the car may vary, the illuminated surface will always be in a standard color. Otherwise, a complex range of light sources and surface color combinations would have to be held in stock. Moreover, in case of physical damage of the surface by external force, a complex repair is required for restoring the illumination effect. This is not only relevant for the repair costs but also for the insurance class of the car.

An alternative technical solution to present illumination on surfaces could be a light projection. However, the technology used in prior art for this purpose, e.g., blackout-projectors (Gobo shutter) or DLP-projectors, are low energy efficiency solutions which are limited for a projection on flat surfaces, e.g., in floor projection of a car make or model logo projected from the door frame to the floor. This is in fact the only application where such projectors are actually used. However, such projectors are not suitable for projecting on a 3D-shaped surface as in this case the illumination will be distorted. Therefore, projections on bended surfaces are limited. This also applies to the projection on surfaces in close proximity.

Additionally, this technology is color dependent. Typical light sources have non-discrete wavelengths. This leads to a color shift of the projection on various body colors, which can be critical to legal color requirements and perceived quality.

Hence, it is an object of the present invention to provide a means for illuminating a vehicle surface which does not suffer from the drawbacks of prior art or at least to a lesser extent. In particular, a high illuminance illumination of three-dimensionally shaped parts in various colors is to be provided which will also work in confined spaces.

US20160328854A1 discloses a distance sensor, which includes a projection light source, a first light guiding means positioned to guide light emitted by the projection light source, a diffractive optical element positioned to split the light guided by the first light guiding means into a plurality of projection beams traveling in different directions, and an image capturing device positioned to capture an image of a field of view, including a projection pattern created by an incidence of the plurality of projection beams on an object in the field of view.

CN113176701B discloses a projection device, which includes a plurality of light sources configured to emit light beams of different colors; a plurality of diffractive optical elements corresponding to the plurality of light sources are disposed downstream of the optical paths of the plurality of light sources, where each diffractive optical element is capable of receiving a light beam emitted by the corresponding light source and modulated to project a corresponding pattern on a projection plane, where the patterns projected by each diffractive optical element on the projection plane at least partially coincide.

US7175321B1 discloses a vehicle projection system relating to use of a light projecting system, which includes at least one light projector adapted to project at least one decorative light design onto at least one exterior portion of a vehicle. The system preferably uses a laser projector and user-selectable controller to select and control decorative designs projected onto the vehicle exterior. The controller may be manually operated, computer programmed, remote controlled or utilize pre-selected programming.

### Summary of the disclosure

The present invention is set out in the appended set of claims. In an aspect, this disclosure relates to a laser projector for projecting a joint projection pattern on a vehicle surface, comprising
at least one laser light source for generating at least two laser beams;
at least one projection unit in optical connection with the at least two laser beams,

wherein the at least one projection unit has a projection unit housing that houses at least one diffractive optic element arranged in an optical path of the at least two laser beams for generating a projection pattern, the projection unit housing being provided with an optically transparent aperture through which the projection pattern can be projected on the vehicle surface,
wherein the laser projector comprises at least two diffractive optic elements that can be configured to create a joint projection pattern that can cover an angular space of up to 180°.

The embodiments of this disclosure overcome the limitations of the prior art by using a laser projection of the light pattern on the relevant surface in any desired body color. The single wavelength of the laser light source is highly efficient because there is less loss of light in the optical system, and it is less sensitive to color shift on various surface colors. The laser light source is highly efficient because the vast majority of its light is re-distributed into the desired projection pattern without the need to block light as is required by gobo shutter blackout-projectors. As a consequence, the projection surface can be painted in any body color.

Since it is a projection on the surface, the embodiments of this disclosure need no provisions for transmitting light through opaque materials. This means, in the unlit condition there is no visual surface impact because the surface is a standard painted body part surface.

A particular characteristic of this disclosure is the projection on non-flat surfaces, like vehicle body surfaces which are 3D-formed. By using a specifically made diffractive optic element (DOE), it is possible to project the light function in any desired pattern. With a layout of the diffractive optical element, which is based on a calculated geometry, it is possible to compensate the distortion of the pattern when projected on 3D-shaped surfaces. Hence, the DOE development needs specific and individual calculations of each projected element or form. To this end, additionally to the conventional DOE structure, which is able to generate diffraction patterns, this technical approach adds the complex calculation of rectifying the projection pattern on the projection surface. As a result, the DOE structure is compensating the distortion of the projected element on the non-orthogonal incident angle. Nevertheless, this correction is much easier and more precisely achieved than the complex design of a correcting optics as would be required for standard DLP-projectors or blackout projectors for this purpose. Moreover, the intensity distribution in the projected pattern can exactly be controlled. A lower intensity in the near field and a higher intensity in areas farther away from the light source may contribute to a uniform visual appearance of the whole projected pattern. This allows the usage of this technology on nearly every free form surface.

Since the embodiments of this disclosure require the use of at least two DOE's which each are to be illuminated by a laser beam, the "at least one laser light source for generating at least two laser beams" is meant to be understood as covering the cases of, for example, two separate laser light sources each generating a single laser beam as well as a single laser light source generating with the aid of a beam splitter two laser beams. If the laser projector uses more than two diffractive optic elements, correspondingly more laser light sources and/or beam splitters are used.

The at least two DOE's may be provided by at least two projection units each having at least one DOE or provided by one single projection unit having at least two DOE's.

There is no mandatory need for a dedicated logical driver unit to be implemented in the projector assembly. The control logic may also be driven by an external unit, e.g., the rear light control module, which is anyhow available in a vehicle. As technical variation it is also possible that the driver unit is decentralized and integrated into the projector electronics.

A special characteristic of a DOE, as compared with standard projection systems, is the unlimited depth of field. That is, a sharp focus of the projected light on any arbitrary free-form surface exists independent from the projection distance. The projection is also possible with incident angles.

Since the illumination effect is a projection, it is possible to extend the light function over multiple parts without creating a gap within the projected pattern between two adjacent illuminated parts. For example, an air duct may be illuminated wherein the projected pattern is also extended to the bumper fascia, which is a separate part assembly, without any visual disruption of the pattern.

In case of a physical impact, which destroys the projection surface, for example when the bumper fascia is cracked during an accident, the part can be replaced with a standard procedure. No complex assembly is required to reinstall the light function.

Further, the embodiments of this disclosure have a substantial compactness and weight benefit, due to very small dimensions in comparison to prior art transmission solutions and conventional DLP or blackout-projectors (Gobo projectors). Also, the power consumption of the disclosed laser projectors is much lower than that of the prior art projection systems.

In embodiments, the laser projector can be free from collimating elements. In contrast to prior art, the technical solution of this disclosure can exclude collimating or focusing optical elements.

The application of laser light on exterior vehicle applications is safety relevant. There must be guaranteed that no laser light is harming surrounding observers. Collimated laser light can in this perspective be critical, due to high laser light ray density. Hence, said collimating elements can be explicitly avoided for keeping the laser light ray density as low as possible. It can be one advantage of this disclosure to guarantee eye safety compliance for exterior applications. In this disclosure, this measure in combination with the selected laser power is enabling an eye safe application in nominal use.

The effect can be demonstrated with a comparison between a laser diode sending a beam once directly and once through a collimation lens on a DOE. When looking from a distance of 100 mm into the laser, the DOE will - under the assumption of a suitably low selected power of the laser - in either case sufficiently distribute the laser light to avoid damage to the eye. However, once the DOE is damaged or falls out during an impact in an accident or vibrations from the driving vehicle, the full emission of the collimated laser light may at that distance enter the eye having a typical diameter of 7 mm and then cause damage to the eye. As opposed to this, due to divergence of the laser diode emission (typically 8° x 15°), even without the DOE only a fraction of about 1/13 of the laser emission may enter the eye. Also, the intensity decreases with distance of the eye.

In the embodiments of this disclosure, a combination of two or more DOE's is used for the projection of the pattern. Due to the very short projection distances required for the on-car projection in specific exterior applications such as in air ducts, the resulting angular spread, which is needed to cover the hole pattern, exceeds the physical limitations (diffractive angle around 90° angular space) of a single DOE. In the given extremely narrow installation space, it is technically not possible to increase the projection distance for decreasing the angular spread. However, by combining two or more DOE's and overlaying or complementing their projected patterns, it is possible to enlarge the field of view (FoV) of the laser projector. This results in a larger projection area on the 3D-shaped vehicle surface. While a single DOE will not be able to cover a FoV of more than 90° due to the physical limitations of its optic principal, a combination of two or more of them can easily cover up to 180°. These 180° are referring to the beam angle measured at the point of exit from the laser projector. Consequently, the disclosed laser projectors are able to produce a sharp image of the pattern in a whole hemisphere in front of the projector. Existing laser projectors for normal interior applications, with their specific arrangement, are as a matter of principle not able to cover such an extremely large field of view as required for this disclosure's projection surfaces. In contrast to an interior application, the projection distances required for an internal illumination effect of an air duct are smaller at least by a factor of 10 to 20.

The construction and internal arrangement of the disclosed laser projectors may follow different schemes regarding the position of the parts and the structural elements. The essential parts at least comprise a laser source, two DOE's, and a projection unit. The embodiments may differ then in the presence of further parts and the relative arrangement of these parts.

In embodiments, the projection unit housing can be formed by a first part and a second part that are or can be joint.

When referring to the one or more projection units being "in optical connection with the laser beams", this is particularly meant to cover two alternatives. In the first alternative, the laser light source is a part outside the projection unit and the laser beams are directed by optical means, such as a fiber optic, into the projection unit. In the second alternative, the laser light source is a part installed inside the projection unit.

In some embodiments, the at least one projection unit may have a mirror element arranged in the projection unit housing for deflecting at least one of the at least two laser beams onto the at least one diffractive optic element arranged in the projection unit housing, wherein optionally the mirror element is a mirror or is formed as an integral inner surface of the projection unit housing, optionally created by polishing and/or metallization.

The mirror element may be a mirror or formed as an integral surface of the first part of the projection unit housing, optionally created by polishing and/or metallization. Forming the mirror element as an integral surface can enhance the precision of the positioning and safe on costs. If the first part of the projection unit housing is already made of metal, an adequate polishing is sufficient. In the alternative of a polymer part, a metallization of the respective surface by commonly applied techniques, such as CVD or PVD, may be applied.

In embodiments, the at least two diffractive optic elements may be provided within one single projection unit, or the laser projector may comprise at least two projection units each having at least one diffractive optic element.

The DOE's may be held by the first part of the projection unit housing. Since at least two DOE's are required for the laser projector, in a first alternative there may be installed a single projection unit whose first part of the projection unit housing holds two or more DOE's. In a second alternative, there may be installed two or more projection units whose first part of the projection unit housing holds at least one DOE. For example, for three DOE's it is possible to have one projection unit holding two DOE's and one projection unit holding one DOE or three projection units holding one DOE each.

Installing two DOE's in a single projection unit will provide the advantage of minimized positioning tolerances of the DOE's relative to each other. The same applies to the optional installation of a mirror element for deflecting the laser beams onto the DOE's in the first parts of the projection unit housing. Using a mirror element may be particularly advantageous if the space for installation of the laser projector is very small, such as in an air duct. Then its dimensions can be minimized and in turn the projection distance maximized by arranging the laser source at an angle, usually perpendicular, to the DOE's and deflect the beam onto them with the mirror element.

In some embodiments, the laser light source may be held by the second part of the projection units housing. In that case, the whole relative arrangement of all optical parts, i.e., the laser light source, mirror element, and DOE, is minimized in positioning tolerances because all fixation and positioning elements are formed out of one common projection unit. Typical laser diodes are small enough for that purpose.

In some embodiments, one part of the projection unit housing of the at least one projection unit that holds the at least one laser light source may be made of metal, preferably aluminum or copper, or a thermally conductive polymer. This is particularly useful for a passive cooling effect on the laser light source when held, for example, by the second part of the projection unit housing. If the first part of the projection unit housing then is also made of the same materials this will increase the effect of cooling but also increase the part costs when compared to a normal polymer part. Hence, the material of the part of the projection unit housing not holding a laser light source should be chosen as required and depending on preferences.

In some embodiments, a beam splitter is arranged in the optical path between one of the at least one laser light source and the at least two diffractive optic elements for generating the at least two laser beams, wherein optionally at least two laser light sources use the same beam splitter.

With this design, a single laser light source can be used for generating the laser beams for two DOE's. This can be particularly useful when two DOE's are installed within a single projection unit. The application of a beam splitter also allows the usage of a twin laser engine. This can be useful for achieving a higher light intensity with smaller laser diodes which will produce less heat or for the creation of a light pattern with two different colors.

In further embodiments, the at least one laser light source may be arranged within the projection unit housing, or the at least one laser light source may be arranged external to the projection unit housing and optically connected to the at least one projection unit by means of a fiber optic.

The laser light sources may be arranged external to the projection unit housing and optically connected to the projection units by means of a fiber optic. Preferably, they are not only arranged external to the projection unit housing but also external to the common housing. Arranging the laser light sources outside of the projection units or even the laser projector can be advantageous for two reasons. The first reason is that the laser light sources can be better cooled outside projection unit housing and particularly outside the common housing and are easier accessible for maintenance or replacement. The second reason is that the fiber optic will require less space than a laser diode. Hence, the laser projector may be built smaller if the laser light sources are arranged outside the laser projector.

Preferably, the laser light sources are held by the upper second part of the projection units housing and the DOE's held by the lower first part of the projection units housing. The terminal end of the fiber optic may also be held by the second part of the one or more projection units housing.

In some embodiments, the at least one laser light source may be operable with electric currents adjusted dependent on a color of the vehicle surface so as to create the same luminous density of the projection on the vehicle surface for every color.

The projection surfaces may have various colors as they are depending on the vehicle body color paint. The reflection characteristic of the body paint is not constant. Brighter colors have a higher reflection rate than darker paints and therefore a higher luminance. To guarantee an identical visual projection appearance, the luminance on various body paints needs to be constant. For achieving this, the laser light source may be operated with specifically adjusted electric currents.

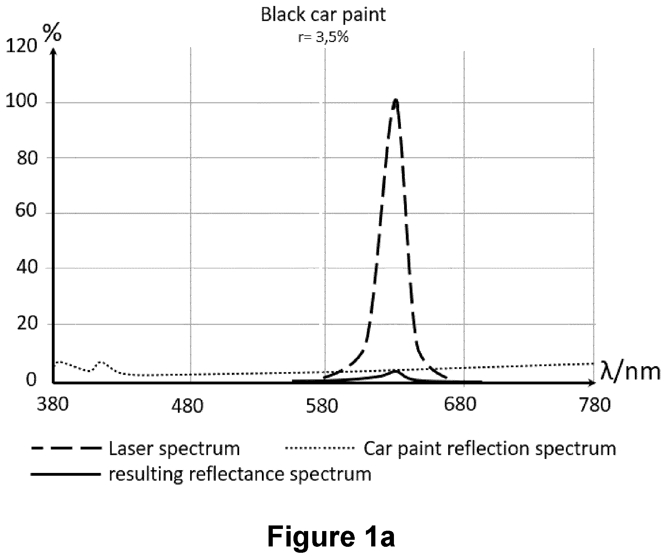

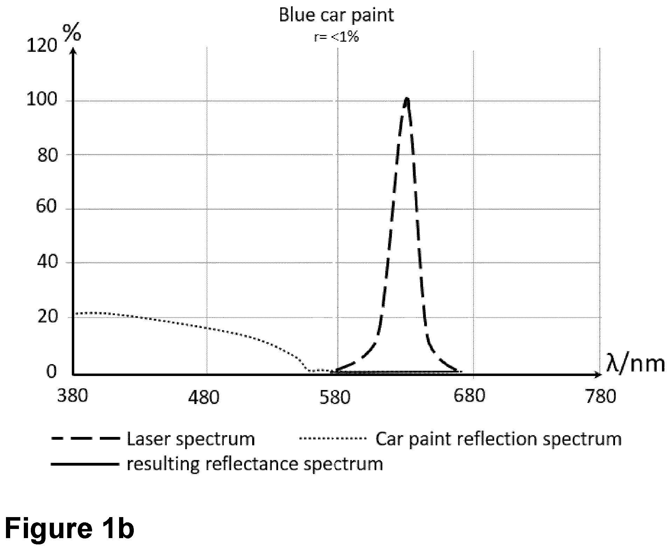

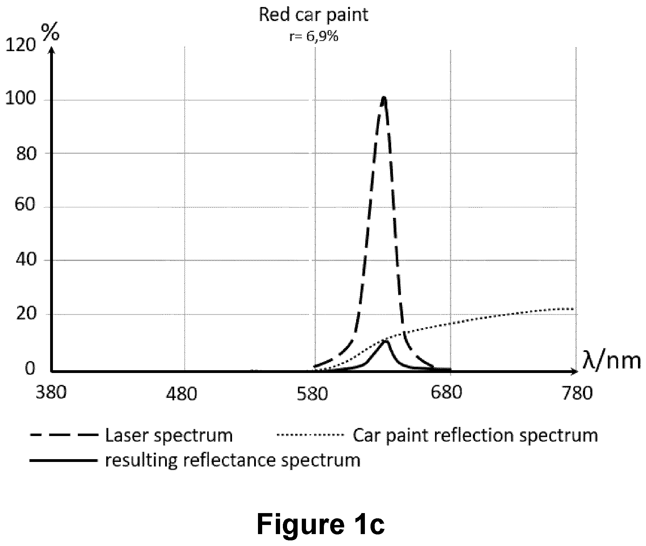

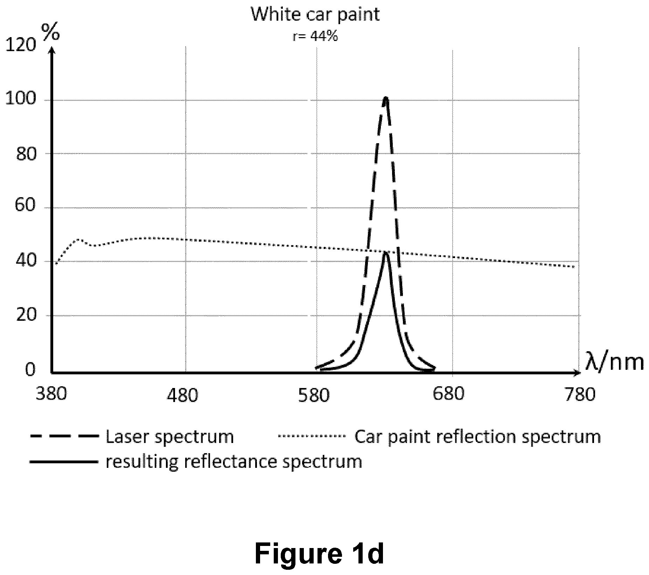

In order to calculate the electrical current for different projection surfaces, the various surfaces reflection characteristics can be measured spectrally. With the given spectral emission characteristics of the laser diode, both spectra can be multiplied to determine the overall reflectance for the given combination. **Figure 1** shows the resulting reflectance spectra (solid lines) of a given laser wavelength of 632 nm (dashed lines) on several car paint colors (1a = black, 1b = blue, 1c = red, 1d = white). The reflectance of each car paint color is shown by the dotted lines.

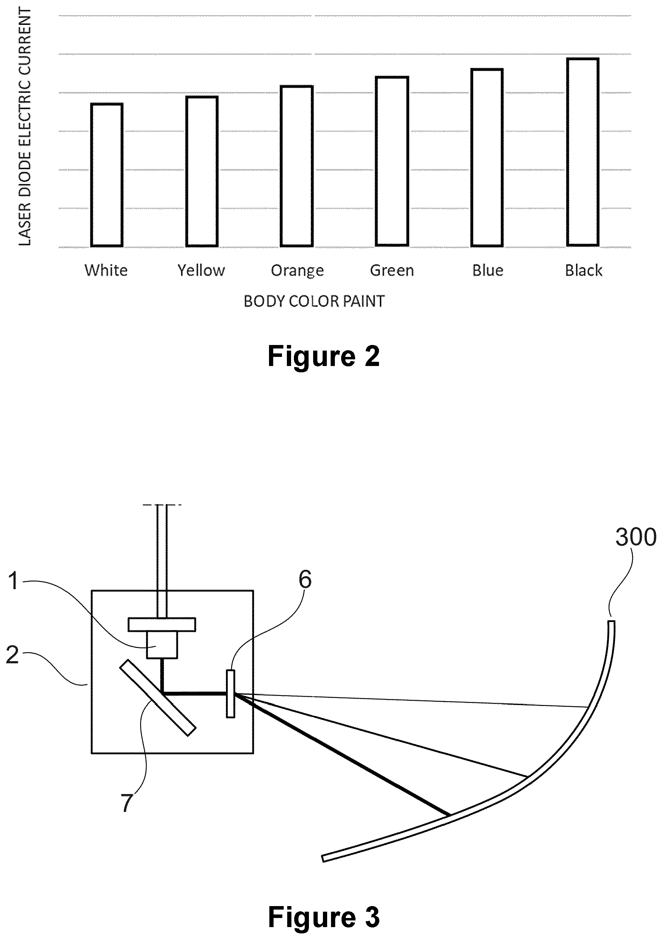

**Figure 2** shows a comparison between the laser diode currents required for the same luminance on various body paints. As can be seen, the darker the color of the body paint, the higher is the required current to achieve the same visual impression of the projected pattern.

This calculation can be done manually in advance and the laser projectors can be specifically built for use with a certain body color. However, as this would require keeping in stock as many variants of the laser projectors as body colors are used, it is advantageous to provide the laser projectors with several values for the electrical current of the laser being stored in the electronics of the control module of said laser light source.

Hence, in further embodiments, the laser projector may further comprise a storage medium having stored thereon a predetermined list of electric currents required for selected vehicle surface colors and means for selecting and correspondingly adjusting the electric current for operating the laser light source.

In embodiments, the means for selecting and correspondingly adjusting may be a switch and the storage medium may be a range of different current regulation circuits or the means for selecting and correspondingly adjusting may be a processing unit and the storage medium may be a data storage medium operatively coupled with the processing unit.

In further embodiments, the laser projector may further comprise a photo-cell sensor for determining the reflectivity of the projection on the vehicle surface for the wavelength of the at least two laser beams and means for constantly adjusting the electric currents for operating the at least one laser light source dependent thereon.

As an alternative to the calculation in advance, in these embodiments, the measurement can be done in continuous measurements with an additional embedded photo-cell sensor which determines changes of reflectivity for the wavelength of the laser and laser current can in response constantly be adjusted. This embodiment also provides the benefit of a dynamical compensation of dust and dirt on the projection surface and can also adapt the brightness of projection in accordance to surrounding brightness, such as a higher current in daytime and a lower current in night time.

In embodiments, the laser projector may further comprise a common housing for housing the at least one projection unit, the common housing having at least one outer optically transparent aperture through which the joint projection pattern can be projected on the vehicle surface, wherein the optically transparent aperture preferably comprises an outer lens for providing a sealed laser projector. This may in particular avoid that dirt and dust can enter the projector and deteriorate the optics. The term outer "lens" is in this context explicitly meant to comprise also a simple glass cover without any beam shaping properties.

In some embodiments, the outer lens may be provided with a flange that allows light distribution on the vehicle surface but blocks the direct view on the diffractive optic element's light emitting surface. Such a flange or ring around the lens may shield the direct view on the DOE's, particularly when the projector is installed in, for example, an air duct in a projection direction perpendicular to the direction of the duct, and consequently increase eye safety.

In embodiments, the output power of the laser projector may be below 5 mW. Such an output power, which corresponds to a safety class 3R, will allow safe use of the laser projectors on the outside of a vehicle while still providing sufficient light intensity for good visibility of the projected patterns even under bright ambient light conditions.

### Brief Description of the Drawings

- **Figure 1**: shows the resulting reflectance spectra of a given laser wavelength of 632 nm on several car paint colors (**1a** = black, **1b** = blue, **1c** = red, **1d** = white).
- **Figure 2**: shows a comparison between the laser diode currents required for the same luminance on various body paints.
- **Figure 3**: shows a principal sketch of a projection unit with a deflection mirror.
- **Figure 4**: shows a principal sketch of a projection unit without a deflection mirror.
- **Figure 5**: shows an exploded view of a projection unit with deflection mirror and optical element (DOE).
- **Figure 6**: shows a front/side/rear view of a laser projector assembly.

### Detailed Description

**Figure 3** shows a principal sketch of a projection unit **(2)** with a deflection mirror element **(7).** The projection unit **(2)** is shown in this sketch only as a symbolic square containing the relevant elements of the laser projector **(100).** In the upper section of the projection unit **(2),** which would be constituted by the second part of the projection unit housing, is arranged the laser light source **(1)** shown here as a laser diode. The laser beam emitted from the laser light source **(1)** is deflected by the mirror element **(7)** onto the diffractive optic element **(6).** The mirror element **(7)** can either be a separate mirror which is fixed in the lower section (the first part of the projection unit housing) of the projection unit **(2)** or a polished or metallized part of its integral surface. The diffractive optic element **(6)** diffracts the incoming laser beam onto the curved vehicle surface **(300)** shown on the right side of the figure. As indicated by the different line widths, the intensity of the laser beam may vary as required and pre-calculated for the diffractive optic element **(6).** In this figure, the laser light source **(1)** is arranged perpendicular to the diffractive optic element **(6)** and the mirror element **(7)** consequently inclined at an angle of 45°. This is a typical arrangement but of course other angles between these parts are also possible.

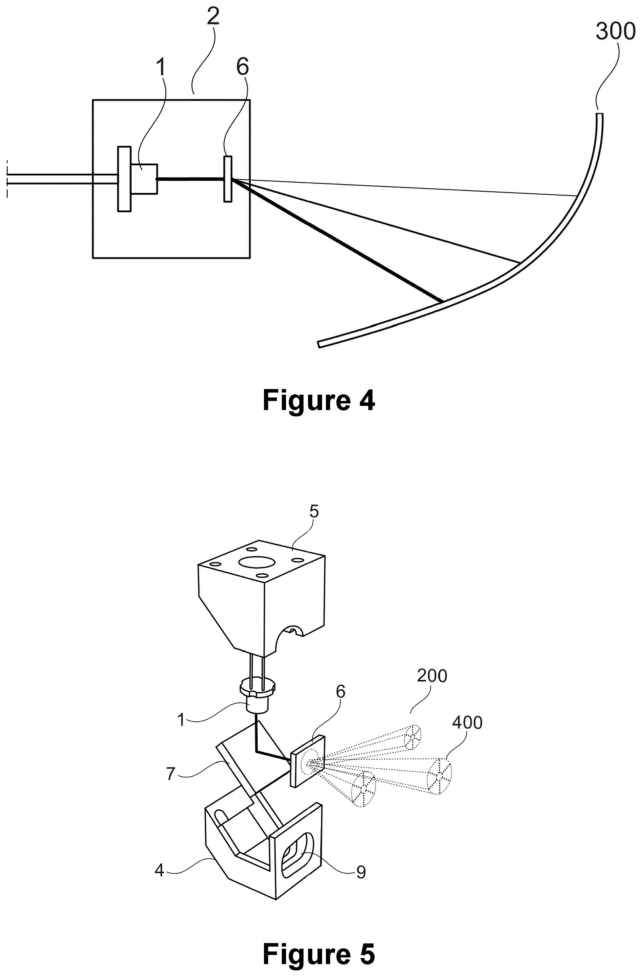

In **Figure 4****,** a corresponding principal sketch of a projection unit **(2)** without a deflection mirror element **(7)** is shown. Consequently, the laser light source **(1)** is arranged horizontally and in line with the diffractive optic element **(6).**

**Figure 5** shows an exploded view of a projection unit **(2)** with deflection mirror element **(7)** and diffractive optic element **(6).** The projection unit **(2)** is formed in this example by the lower first part of the projection unit housing **(4)** and the upper second part of the projection unit housing **(5)** which both are made of a thermally conductive polymer by injection molding. The laser light source **(1)** is in this example again a laser diode which is mounted in the second part of the projection unit housing **(5)** of the projection unit **(2).** In the top surface of the second part of the projection unit housing **(5),** besides the larger central hole for the laser light source **(1)** and its cables there are visible four screw holes which will receive the screws for joining the second part of the projection unit housing **(5)** to the first part of the projection unit housing **(4).** In the first part of the projection unit housing **(4)** there is a recess for receiving the mirror element **(7)** which can be a polished metal plate or a glass mirror. In the corners of the first part of the projection unit housing **(4)** there are corresponding screw holes. On the front side of the first part of the projection unit housing **(4)** there is the optically transparent aperture **(9)** through which the diffracted laser beam may exit the projection unit **(2).** The deflected laser beam and the joint projection pattern **(200)** formed by the projection patterns **(400)** are also indicated in the figure. Behind the optically transparent aperture **(9)** is a slot holder (not visible in the figure) for receiving the diffractive optic element **(6).** The optically transparent aperture **(9)** can be a simple opening or covered with glass depending on the further design of the laser projector **(100)** and its common housing **(3),** respectively. At least at one of the apertures for letting the laser beam out of the projector a sealing cover should be installed in order to avoid that dirt and dust may enter the optical system.

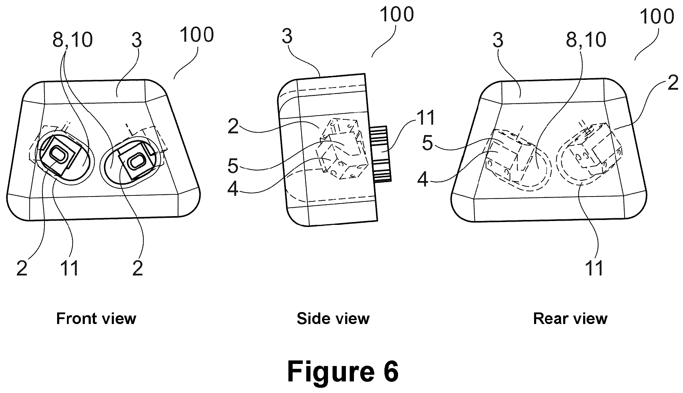

**Figure 6** shows a perspective front, side, and rear view of a laser projector **(100).** In the depicted example, there are installed two projection units **(2)** as shown in Figure 5 in the common housing **(3).** Each of the projection units **(2)** has its own outer optically transparent aperture **(8).** In other embodiments, there may also be a single outer optically transparent aperture **(8)** for both/each of the projection units **(2).** The outer optically transparent apertures **(8)** are covered with an outer lens **(10)** to create a sealed laser projector **(100)** unit. The outer lenses **(10)** are surrounded by a flange **(11)** for blocking direct view on the projection units **(2)** and their diffractive optic elements **(6).** The depicted example of a laser projector **(100)** may for example be installed as shown in the side view into an air duct arranged perpendicularly through the paper plane. Hence, even when looking directly into the air duct, the flange **(11)** will block the view onto the outer lenses **(10)** while the laser projector (100) projects a light pattern onto the right side of the air duct.

### Reference numbers

- **1**: laser light source
- **2**: projection unit
- **3**: common housing
- **4,5**: projection unit housing
- **6**: diffractive optic element
- **7**: mirror element
- **8,9**: optically transparent aperture
- **10**: outer lens
- **11**: flange
- **100**: laser projector
- **200**: joint projection pattern
- **300**: vehicle surface
- **400**: projection pattern

## Claims

1. Laser projector (100) for projecting a joint projection pattern (200) on a vehicle surface (300), comprising
at least one laser light source (1) for generating at least two laser beams;
at least one projection unit (2) in optical connection with the at least two laser beams, wherein the at least one projection unit (2) has a projection unit housing (4, 5) that houses at least one diffractive optic element (6) arranged in an optical path of the at least two laser beams for generating a projection pattern (400), the projection unit housing (4, 5) being provided with an optically transparent aperture (9) through which the projection pattern (400) can be projected on the vehicle surface (300),
wherein the laser projector (100) comprises at least two diffractive optic elements (6) that are configured to create a joint projection pattern (200) that can cover an angular space of up to 180°,
wherein the laser projector comprises means configured to adjust electric currents for operating the at least one laser light source, so that the joint projection pattern (200) created by the at least two diffractive optic elements (6) have the same luminous density of the projection after being projected on vehicle surfaces (300) with different colors.

2. The laser projector (100) according to claim 1, wherein the laser projector (100) is free from collimating elements.

3. The laser projector (100) according to claim 1 or 2,
wherein the at least two diffractive optic elements (6) are provided within one single projection unit (2), or
wherein the laser projector (100) comprises at least two projection units (2) each having at least one diffractive optic element (6).

4. The laser projector (100) according to one of the preceding claims,
wherein the at least one projection unit (2) has a mirror element (7) arranged in the projection unit housing (4, 5) for deflecting at least one of the at least two laser beams onto the at least one diffractive optic element (6) arranged in the projection unit housing (4, 5),
wherein preferably the mirror element (7) is a mirror or is formed as an integral inner surface of the projection unit housing (4, 5), preferably created by polishing and/or metallization.

5. The laser projector (100) according to one of the preceding claims, wherein a beam splitter is arranged in the optical path between one of the at least one laser light source (1) and the at least two diffractive optic elements (6) for generating the at least two laser beams, wherein optionally at least two laser light sources (1) use the same beam splitter.

6. The laser projector (100) according to one of the preceding claims,
wherein the at least one laser light source (1) is arranged within the projection unit housing (4, 5), or
wherein the at least one laser light source (1) is arranged external to the projection unit housing (4, 5) and optically connected to the at least one projection unit (2) by means of a fiber optic.

7. The laser projector (100) according to one of the preceding claims, wherein one part of the projection unit housing (4, 5) of the at least one projection unit (2) that holds the at least one laser light source (1) is made of metal, preferably aluminum or copper, or a thermally conductive polymer.

8. The laser projector (100) according to claim 1, further comprising a storage medium having stored thereon a predetermined list of electric currents required for selected vehicle surface (300) colors and means for selecting and correspondingly adjusting the electric current for operating the laser light source (1).

9. The laser projector (100) according to claim 8, wherein the means for selecting and correspondingly adjusting are a switch and the storage medium is a range of different current regulation circuits or the means for selecting and correspondingly adjusting are a processing unit and the storage medium is a data storage medium operatively coupled with the processing unit.

10. The laser projector (100) according to one of the preceding claims, further comprising a photo-cell sensor for determining reflectivity of the projection on the vehicle surface for the wavelength of the at least two laser beams and means for constantly adjusting the electric currents for operating the at least one laser light source (1) dependent thereon.

11. The laser projector (100) according to one of the preceding claims, further comprising a common housing (3) for housing the at least one projection unit (2), the common housing (3) having at least one outer optically transparent aperture (8) through which the joint projection pattern (200) can be projected on the vehicle surface (300), wherein the optically transparent aperture (8) preferably comprises an outer lens (10) for providing a sealed laser projector (100).

12. The laser projector (100) according to claim 11, wherein the outer lens (10) is provided with a flange (11) that allows light distribution on the vehicle surface (300) but blocks a direct view on the diffractive optic element's (6) light emitting surface.

13. The laser projector (100) according to one of the preceding claims, wherein the output power of the laser projector (100) is below 5 mW.

## Patentansprüche

1. Laserprojektor (100) zum Projizieren eines gemeinschaftlichen Projektionsmusters (200) auf eine Fahrzeugoberfläche (300), umfassend
mindestens eine Laserlichtquelle (1) zum Generieren von mindestens zwei Laserstrahlen;
mindestens eine Projektionseinheit (2) in optischer Verbindung mit den mindestens zwei Laserstrahlen, wobei die mindestens eine Projektionseinheit (2) ein Projektionseinheitsgehäuse (4, 5) aufweist, das mindestens ein in einem Strahlengang der mindestens zwei Laserstrahlen angeordnetes diffraktives optisches Element (6) zum Generieren eines Projektionsmusters (400) aufnimmt, wobei das Projektionseinheitsgehäuse (4, 5) mit einer optisch transparenten Öffnung (9) versehen ist, durch die das Projektionsmuster (400) auf die Fahrzeugoberfläche (300) projiziert werden kann,
wobei der Laserprojektor (100) mindestens zwei diffraktive optische Elemente (6) umfasst, die ausgelegt sind, um ein gemeinschaftliches Projektionsmuster (200) zu erzeugen, das einen Winkelraum von bis zu 180° abdecken kann,
wobei der Laserprojektor Mittel umfasst, die ausgelegt sind, um elektrische Ströme für den Betrieb der mindestens einen Laserlichtquelle anzupassen,
sodass das von den mindestens zwei diffraktiven optischen Elementen (6) erzeugte gemeinschaftliche Projektionsmuster (200) dieselbe Leuchtdichte der Projektion aufweist, nachdem es auf Fahrzeugoberflächen (300) mit verschiedenen Farben projiziert wurde.

2. Laserprojektor (100) nach Anspruch 1, wobei der Laserprojektor (100) frei von Kollimationselementen ist.

3. Laserprojektor (100) nach Anspruch 1 oder 2,
wobei die mindestens zwei diffraktiven optischen Elemente (6) innerhalb einer einzigen Projektionseinheit (2) vorgesehen sind, oder
wobei der Laserprojektor (100) mindestens zwei Projektionseinheiten (2) umfasst, die jeweils mindestens ein diffraktives optisches Element (6) aufweisen.

4. Laserprojektor (100) nach einem der vorhergehenden Ansprüche,
wobei die mindestens eine Projektionseinheit (2) ein in dem Projektionseinheitsgehäuse (4, 5) angeordnetes Spiegelelement (7) zum Umlenken mindestens eines der mindestens zwei Laserstrahlen auf das mindestens eine in dem Projektionseinheitsgehäuse (4, 5) angeordnete diffraktive optische Element (6) aufweist,
wobei das Spiegelelement (7) vorzugsweise ein Spiegel ist oder als integrale innere Oberfläche des Projektionseinheitsgehäuses (4, 5) ausgebildet ist, vorzugsweise erzeugt durch Polieren und/oder Metallisierung.

5. Laserprojektor (100) nach einem der vorhergehenden Ansprüche, wobei in dem Strahlengang zwischen einer der mindestens einen Laserlichtquelle (1) und den mindestens zwei diffraktiven optischen Elementen (6) ein Strahlteiler zum Generieren der mindestens zwei Laserstrahlen angeordnet ist, wobei optional mindestens zwei Laserlichtquellen (1) denselben Strahlteiler verwenden.

6. Laserprojektor (100) nach einem der vorhergehenden Ansprüche,
wobei die mindestens eine Laserlichtquelle (1) innerhalb des Projektionseinheitsgehäuses (4, 5) angeordnet ist, oder
wobei die mindestens eine Laserlichtquelle (1) außerhalb des Projektionseinheitsgehäuses (4, 5) angeordnet und mittels einer Faseroptik mit der mindestens einen Projektionseinheit (2) optisch verbunden ist.

7. Laserprojektor (100) nach einem der vorhergehenden Ansprüche, wobei ein Teil des Projektionseinheitsgehäuses (4, 5) der mindestens einen Projektionseinheit (2), der die mindestens eine Laserlichtquelle (1) hält, aus Metall, vorzugsweise Aluminium oder Kupfer, oder einem wärmeleitenden Polymer besteht.

8. Laserprojektor (100) nach Anspruch 1, ferner umfassend ein Speichermedium, auf dem eine vorbestimmte Liste von elektrischen Strömen gespeichert ist, die für ausgewählte Farben der Fahrzeugoberfläche (300) erforderlich sind, und Mittel zum Auswählen und entsprechenden Anpassen des elektrischen Stroms für den Betrieb der Laserlichtquelle (1).

9. Laserprojektor (100) nach Anspruch 8, wobei die Mittel zum Auswählen und entsprechenden Anpassen ein Schalter sind und das Speichermedium ein Bereich verschiedener Stromregelkreise ist oder die Mittel zum Auswählen und entsprechenden Anpassen eine Verarbeitungseinheit sind und das Speichermedium ein Datenspeichermedium ist, das betriebswirksam mit der Verarbeitungseinheit gekoppelt ist.

10. Laserprojektor (100) nach einem der vorhergehenden Ansprüche, ferner umfassend einen Fotozellensensor zum Bestimmen des Reflexionsvermögens der Projektion auf die Fahrzeugoberfläche bei der Wellenlänge der mindestens zwei Laserstrahlen und Mittel zum ständigen Anpassen der elektrischen Ströme für den Betrieb der mindestens einen Laserlichtquelle (1) in Abhängigkeit davon.

11. Laserprojektor (100) nach einem der vorhergehenden Ansprüche, ferner umfassend ein gemeinsames Gehäuse (3) zur Aufnahme der mindestens einen Projektionseinheit (2), wobei das gemeinsame Gehäuse (3) mindestens eine äußere optisch transparente Öffnung (8) aufweist, durch die das gemeinschaftliche Projektionsmuster (200) auf die Fahrzeugoberfläche (300) projiziert werden kann, wobei die optisch transparente Öffnung (8) vorzugsweise eine äußere Linse (10) zum Bereitstellen eines abgedichteten Laserprojektors (100) umfasst.

12. Laserprojektor (100) nach Anspruch 11, wobei die äußere Linse (10) mit einem Flansch (11) versehen ist, der eine Lichtverteilung auf der Fahrzeugoberfläche (300) ermöglicht, aber eine direkte Sicht auf die lichtemittierende Oberfläche des diffraktiven optischen Elements (6) blockiert.

13. Laserprojektor (100) nach einem der vorhergehenden Ansprüche, wobei die Ausgangsleistung des Laserprojektors (100) unter 5 mW liegt.

## Revendications

1. Projecteur laser (100) pour projeter un motif de projection commun (200) sur une surface de véhicule (300), comprenant
au moins une source de lumière laser (1) pour générer au moins deux faisceaux laser ;
au moins une unité de projection (2) en connexion optique avec les au moins deux faisceaux laser, dans lequel l'au moins une unité de projection (2) a un boîtier d'unité de projection (4, 5) qui abrite au moins un élément optique diffractif (6) disposé dans un trajet optique des au moins deux faisceaux laser pour générer un motif de projection (400), le boîtier d'unité de projection (4, 5) étant pourvu d'une ouverture optiquement transparente (9) à travers laquelle le motif de projection (400) peut être projeté sur la surface de véhicule (300),
le projecteur laser (100) comprend au moins deux éléments optiques diffractifs (6) configurés pour créer un motif de projection commun (200) pouvant couvrir un espace angulaire allant jusqu'à 180°,
dans lequel le projecteur laser comprend des moyens configurés pour ajuster les courants électriques afin de faire fonctionner l'au moins une source de lumière laser,
de sorte que le motif de projection commun (200) créé par au moins deux éléments optiques diffractifs (6) présente la même densité lumineuse de la projection après avoir été projeté sur des surfaces de véhicule (300) de couleurs différentes.

2. Projecteur laser (100) selon la revendication 1, dans lequel le projecteur laser (100) est dépourvu d'éléments de collimation.

3. Projecteur laser (100) selon la revendication 1 ou 2,
dans lequel les au moins deux éléments optiques diffractifs (6) sont fournis dans une seule unité de projection (2), ou
le projecteur laser (100) comprend au moins deux unités de projection (2) comportant chacune au moins un élément optique diffractif (6).

4. Projecteur laser (100) selon l'une des revendications précédentes,
dans lequel l'au moins une unité de projection (2) comporte un élément miroir (7) disposé dans le boîtier d'unité de projection (4, 5) pour dévier au moins l'un des au moins deux faisceaux laser sur l'au moins un élément optique diffractif (6) disposé dans le boîtier d'unité de projection (4, 5),
dans lequel, de préférence, l'élément miroir (7) est un miroir ou est formé comme une surface intérieure intégrale du boîtier d'unité de projection (4, 5), de préférence créé par polissage et/ou métallisation.

5. Projecteur laser (100) selon l'une des revendications précédentes, dans lequel un séparateur de faisceau est disposé dans le trajet optique entre l'une des au moins une source de lumière laser (1) et les au moins deux éléments optiques diffractifs (6) pour générer les au moins deux faisceaux laser, dans lequel au moins deux sources de lumière laser (1) utilisent éventuellement le même séparateur de faisceau.

6. Projecteur laser (100) selon l'une des revendications précédentes,
dans lequel l'au moins une source de lumière laser (1) est disposée à l'intérieur du boîtier d'unité de projection (4, 5), ou
dans lequel l'au moins une source de lumière laser (1) est disposée à l'extérieur du boîtier d'unité de projection (4, 5) et reliée optiquement à l'unité de projection (2) au moyen d'une fibre optique.

7. Projecteur laser (100) selon l'une des revendications précédentes, dans lequel une partie du boîtier d'unité de projection (4, 5) de l'au moins une unité de projection (2) qui contient l'au moins une source de lumière laser (1) est faite de métal, de préférence d'aluminium ou de cuivre, ou d'un polymère thermoconducteur.

8. Projecteur laser (100) selon la revendication 1, comprenant en outre un support de stockage sur lequel est stockée une liste prédéterminée de courants électriques requis pour des couleurs de surface de véhicule sélectionnées (300) et des moyens de sélection et de réglage correspondant du courant électrique pour faire fonctionner la source de lumière laser (1).

9. Projecteur laser (100) selon la revendication 8, dans lequel les moyens de sélection et de réglage correspondant sont un commutateur et le support de stockage est une gamme de circuits de régulation de courant différents ou les moyens de sélection et de réglage correspondant sont une unité de traitement et le support de stockage est un support de stockage de données couplé de manière opérationnelle à l'unité de traitement.

10. Projecteur laser (100) selon l'une des revendications précédentes, comprenant en outre un capteur photoélectrique pour déterminer la réflectivité de la projection sur la surface de véhicule pour la longueur d'onde des au moins deux faisceaux laser et des moyens pour ajuster en permanence les courants électriques pour faire fonctionner l'au moins une source de lumière laser (1) en fonction de celle-ci.

11. Projecteur laser (100) selon l'une des revendications précédentes, comprenant en outre un boîtier commun (3) pour loger l'au moins une unité de projection (2), le boîtier commun (3) ayant au moins une ouverture extérieure optiquement transparente (8) à travers laquelle le motif de projection commun (200) peut être projeté sur la surface de véhicule (300), l'ouverture optiquement transparente (8) comprenant de préférence une lentille extérieure (10) pour fournir un projecteur laser (100) scellé.

12. Projecteur laser (100) selon la revendication 11, dans lequel la lentille extérieure (10) est pourvue d'un rebord (11) qui permet la distribution de la lumière sur la surface de véhicule (300) mais bloque une vue directe sur la surface d'émission de lumière de l'élément optique diffractif (6).

13. Projecteur laser (100) selon l'une des revendications précédentes, dans lequel la puissance de sortie du projecteur laser (100) est inférieure à 5 mW.
